(19) Europäisches Patentamt
European Patent Office
Office européen des brevets

(11) **EP 2 137 514 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(21) Anmeldenummer: **08714752.6**

(22) Anmeldetag: **10.03.2008**

(51) Int Cl.:
***G01N 21/45*** (2006.01)

(86) Internationale Anmeldenummer:
**PCT/CH2008/000098**

(87) Internationale Veröffentlichungsnummer:
**WO 2008/110026 (18.09.2008 Gazette 2008/38)**

(54) **INTEGRIERT-OPTISCHER SENSOR**

INTEGRATED OPTICAL SENSOR

CAPTEUR OPTIQUE INTÉGRÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.03.2007 CH 408072007**

(43) Veröffentlichungstag der Anmeldung:
**30.12.2009 Patentblatt 2009/53**

(73) Patentinhaber: **Creoptix AG**
**8820 Wädenswil (CH)**

(72) Erfinder: **COTTIER, Kaspar**
**8820 Wädenswil (CH)**

(74) Vertreter: **P&TS SA (AG, Ltd.)**
**Av. J.-J. Rousseau 4**
**P.O. Box 2848**
**2001 Neuchâtel (CH)**

(56) Entgegenhaltungen:
**WO-A-01/40744    WO-A-98/22807**
**DE-A1- 4 419 586**

- **CLERC ET AL: "Integrated optical output grating coupler as refractometer and (bio-)chemical sensor" SENSORS AND ACTUATORS B, ELSEVIER SEQUOIA S.A., LAUSANNE, CH, Bd. 11, Nr. 1-3, 1. März 1993 (1993-03-01), Seiten 461-465, XP022270763 ISSN: 0925-4005**
- **KUNZ R E ET AL: "Optimizing integrated optical chips for label-free (bio-)chemical sensing" ANALYTICAL AND BIOANALYTICAL CHEMISTRY, SPRINGER-VERLAG, BE, Bd. 384, Nr. 1, 1. Januar 2006 (2006-01-01), Seiten 180-190, XP019327758 ISSN: 1618-2650**
- **WIKI M ET AL: "Novel integrated optical sensor based on a grating coupler triplet" BIOSENSORS & BIOELECTRONICS, ELSEVIER SCIENCE PUBLISHERS, BARKING, GB, Bd. 13, Nr. 11, 1. Januar 1998 (1998-01-01), Seiten 1181-1185, XP002274546 ISSN: 0956-5663**
- **WIKI M ET AL: "WAVELENGTH-INTERROGATED OPTICAL SENSOR FO RBIOCHEMICAL APLICATIONS" OPTICS LETTERS, OSA, OPTICAL SOCIETY OF AMERICA, WASHINGTON, DC, US, Bd. 25, Nr. 7, 1. April 2000 (2000-04-01), Seiten 463-465, XP000950352 ISSN: 0146-9592**

**Beschreibung**

Die Erfindung bezieht sich auf das Gebiet der optischen Sensoren ohne Marker mit hoher Empfindlichkeit, grossem Messbereich, hoher Auslesegeschwindigkeit und grosser Robustheit im Bezug auf Fabrikationstoleranzen, insbesondere bestehend aus integriert-optischen Wellenleitern und einer Auslesevorrichtung, und deren Einsatz in (Bio-) Chemischen Sensoreinheiten, wie sie beispielsweise in der Pharmazeutik oder in der Diagnostik Verwendung finden, gemäss dem Oberbegriff der entsprechenden unabhängigen Patentansprüche.

**STAND DER TECHNIK**

(Bio-) Chemische Sensoren ohne Marker (label-free) basierend auf optischen Ausleseverfahren sind allgemein bekannt. Diese Messmethoden haben gegenüber den weit verbreiteten Methoden, welche beispielsweise fluoreszierende, absorbierende oder radioaktive Marker verwenden, den Vorteil, dass der zu messende Vorgang nicht von der Anwesenheit eines Markers beeinflusst wird. Dies ist zum Beispiel bei der Beobachtung von Bindungsvorgängen kleinster Moleküle von Bedeutung. Ein weiterer Vorteil liegt in der potentiellen Reduktion der Kosten und Zeit, die für eine Messung aufgewendet werden müssen, da der Präparationsschritt mit dem Marker vor der Eigentlichen Messung wegfällt. Die Hauptanwendungen von derartigen (Bio-) Chemischen Sensoren liegen im Bereich der Medikamentenentwicklung z.B. in der Grobselektion von potentiellen Wirkstoffen, oder der spezifischen Charakterisierung von Interaktionen zwischen Wirkstoffen und Zielmolekül. Weitere wichtige Anwendungen liegen im Bereich der Diagnostik, beispielsweise in der Analyse von Blut- oder Urinwerten, der Suche nach Krankheitserregern, oder in der Analyse von Allergien. Weitere Anwendungen liegen zum Beispiel in der Prozesskontrolle, in der Nahrungsmittelbranche, oder in der Umwelttechnik.

Die Anforderungen an eine Detektionsmethode ohne Marker sind unter anderem: eine hohe Empfindlichkeit, so dass auch kleinste Mengen von Substanzen, kleinste Interaktionen, oder kleinste Moleküle beobachtet werden können; eine hohe Auslesegeschwindigkeit, damit der Verlauf einer rasch ablaufenden (Bio-) Chemischen Bindung oder Reaktion aufgelöst werden kann; die Möglichkeit des massiv parallelen Auslesens von vielen Messbereichen als Untereinheiten einer Sensorplattform, letztere vorzugsweise im Format der Mikrotiterplatten, welche in der Pharma-Industrie für Wirkstoff-Selektion mit hohem Durchsatz (high-throughput screening, HTS) verwendet werden und eine parallele Beobachtung von bis zu mehreren hundert oder sogar tausend Vorgängen erlauben; niedrige Kosten pro Messpunkt; und ein grosser Messbereich, damit unterschiedliche Vorgänge mit verschiedenen Signalstärken gleichzeitig beobachtet werden können.

WO 93/04357 beschreibt ein Messsystem basierend auf der so genannten Oberflächen-Plasmonen-Resonanz (Surface Plasmon Resonance, SPR), bei welchem durch Prismen oder Gitter Elektromagnetische Wellen an der Oberfläche von Metallfilmen angeregt werden. Diese Technologie ist unter den Markerfreien Methoden zur Messung (Bio-) Chemischer Vorgänge am weitesten verbreitet. Ein Nachteil von SPR-Sensoren - speziell solcher basierend auf Prismen-Koppler - ist die Schwierigkeit, Sensor-Plattformen im Format der Mikrotiterplatten anzubieten. Des weiteren ist die Messmethode inhärent empfindlich auf Fabrikationstoleranzen, da sie auf einer Resonanz beruht, welche von der (Winkel-)Position der SensorPlattform abhängt, somit müssen kleine Toleranzen verwendet werden und aufwändige Kalibrierungen durchgeführt werden, was sowohl die Kosten wie auch die benötigte Zeit für eine Messungen erhöht. Ein weiterer Nachteil besteht darin, dass die Primäre Empfindlichkeit des Sensors (also die Abhängigkeit der gemessenen physikalischen Grösse wie Winkel oder Wellenlänge, von der zu Messenden Grösse wie Adsorption der Moleküle) grösstenteils vom Material des Wellenleiters bestimmt wird, und nur schwer durch Designmassnahmen erhöht werden kann.

EP1031828 beschreibt einen Sensor, bei welchem eine Anordnung von Gittern das Ein- und Auskoppeln von Licht in einen Wellenleiter erlaubt. Die Messmethode ist für das massiv-parallele Auslesen geeignet. Wie bei einem SPR Sensor beruht die Messmethode auf einer optischen Resonanz, und ist mit dem Nachteil von der Empfindlichkeit auf Fabrikationstoleranzen behaftet. Zudem ist der Messbereich beschränkt durch den einstellbaren Bereich der Messgrösse wie Winkel oder Wellenlänge, und schnelle Auslesegeschwindigkeiten konnten nur innerhalb eines eingeschränkten Messbereiches gezeigt werden.

WO06/071992 beschreibt einen Messapparat, welcher auf Wellenleiter-Gitter basiert. Die Messmethode ist für das massiv-parallele Auslesen geeignet. Ein Nachteil dieser Methode ist, stärker noch als in den vorhergehenden Beispielen und wie im Patent beschrieben, die benötigte Kalibrierung vor einer Messung und die damit verbundenen Kosten.

US6335793 beschriebt einen Sensor, welcher auf einem integriert-optischen Interferometer beruht. Die darin beschriebene Messmethode verfügt zwar über einen grossen Messbereich, ist aber nicht oder nur sehr schwer in eine Plattform mit mehreren Messpunkten zu integrieren, da das Auslesen des interferometrischen Signals in einer Ebene senkrecht zum Wellenleiter erfolgt. Im Weiteren ist sowohl die Fabrikation der Sensorplattformen wie auch des Instrumentes sehr kostenintensiv, und die Extraktion des nützlichen Signals aus den Interferenzmustern ist aufwändig.

WO 98/22807 beschreibt einen Sensor, welcher auf einem integriert-optischen Interferometer beruht. Dabei sind zwei Wellenleiter auf einem Substrat aufgebracht, wobei der erste Wellenleiter der Messung von Oberflächenveränderungen dient, wie zum Beispiel durch eine Bindung von Molekülen, und der zweite Wellenleiter der Referenz dient. Diese Messmethode verfügt zwar über einen grossen Messbereich, ist aber nicht oder nur sehr schwer in eine Plattform mit mehreren Messpunkten zu integrieren, da das Auslesen des interferometrischen Signals in einer Ebene senkrecht zum Wellenleiter erfolgt. Im Weiteren ist sowohl die Fabrikation der Sensorplattformen wie auch des Instrumentes sehr kostenintensiv, und die Extraktion des nützlichen Signals aus den Interferenzmustern ist aufwändig.

## DARSTELLUNG DER ERFINDUNG

Es ist deshalb Aufgabe der Erfindung, eine Sensoreinheit zu schaffen, welche insbesondere für (Bio-) Chemische Messungen der eingangs genannten Art verwendet werden kann, und welche sich durch eine hohe und einstellbare Empfindlichkeit, eine hohe Auslesegeschwindigkeit, die Eignung zur Integration in Mikrotiterplatten, niedrige Kosten pro Messpunkt, und einen grosser Messbereich auszeichnet.

Diese Aufgabe lösen ein Sensor, eine dazu gehörige Beleuchtungsoptik und ein Verfahren zum Auslesen des Sensors mit den Merkmalen der entsprechenden unabhängigen Patentansprüche.

Der integriert-optische Sensor weist also einen optischen Wellenleiter (2) auf, welcher mindestens zwei Einkoppelbereiche (3, 5) aufweist zum Anregen von geführten Wellen, so genannten Moden. Die Koppelbereiche (3, 5) können zum Beispiel als Gitterkoppler, oder als Prismenkoppler ausgebildet sein. Zwischen den Einkoppelbereichen (3, 5) liegt der eigentliche Messbereich (4), welche in Kontakt mit einem Analyten (8) ist, und in einer bevorzugten Ausführungsform eine (Bio-) Chemische Zusatzschicht (7) zum Binden der zu messenden Moleküle enthält. Der Analyt (8) ist in der Regel eine Flüssigkeit oder ein Gas, in dem diese Moleküle nachgewiesen werden sollen oder in welche(s) die zu charakterisierenden Substanzen gelöst sind. Die Präsenz der Moleküle hat eine Veränderung des lokalen Brechungsindex zur Folge, was wiederum die Propagationskonstante, oder den effektiven Brechungsindex, des Wellenleiters (2), beeinflusst. Dies vorausgesetzt, dass sich die gebundenen Moleküle, und somit die lokalen Brechungsindex-Änderungen, im evaneszenten Feld der Moden befinden. Eine Mess-Welle (14), welche nun im Wellenleiter (2) über einen ersten Einkoppelbereich (3) von einem externen Mess-Strahl (12) angeregt wurde, und den Messbereich (4) durchläuft, erfährt also in der Folge eine relative Phasenverschiebung gegenüber dem Ursprünglichen Zustand ohne Präsenz der zu messenden Moleküle. Diese Phasenverschiebung wird nun mit Hilfe einer Referenz-Welle (15) in eine Intensitätsmodulation umgewandelt, so dass diese durch einen geeigneten LichtDetektor (22) gemessen werden kann. Die Referenz-Welle (15) wird in einem zweiten Einkoppelbereich (5) angeregt, welche auch von der Mess-Welle (14) durchlaufen wird. Eine Interferenz der beiden Wellen hinter dem zweiten Einkoppelbereich (5) ist nicht ohne weiteres möglich, da durch die Reziprozität des Koppelvorgangs ein Einkoppelbereich, mit welcher ein Wellenleiter-Mode mit guter Effizienz angeregt wird, zwangsweise auch den grössten Teil eines im Wellenleiter vorhandenen Modes auskoppelt, welcher auf den Einkoppelbereich trifft. Der zweite Einkoppelbereich (5) ist also gemäss der Erfindung so ausgestaltet, dass mindestens fünf Prozent, vorzugsweise ein Zehntel oder ein Zwanzigstel oder ein Drittel, der Amplitude der Mess-Welle (14) beim Durchlaufen des zweiten Einkoppelbereiches (5) erhalten bleibt, um ein messbares Interferenzsignal zu erhalten.

In einer bevorzugten Ausführung ist der zweite Einkoppelbereich (5) als periodischer Gitterkoppler ausgebildet. Die Abschwächung der Amplitude A eines Moden, der einen periodischen Gitterkoppler durchläuft, verläuft bekanntermassen exponentiell mit

$$A(z) = A_0 e^{-\alpha z} \tag{1}$$

Wobei $A_0$ die Amplitude des Modes vor dem Koppler, $\alpha$ der Abschwächungskoeffizient ("leakage factor") und z der im Gitter durchlaufene Weg sind. Der Abschwächungskoeffizient kann zum Beispiel mit der Form der Gitterlinien, mit dem Brechungsindexunterschied an den Gitterlinien, oder mit der Gittertiefe in bekanntem Mass eingestellt werden. Gemäss der Erfindung ist also das Produkt von Gitterlänge $L_g$ und Schwächungskoeffizient $\alpha$ beschränkt durch:

$$L_g \cdot \alpha \leq -\ln(0.05) \approx 3 \tag{2}$$

Die Formel gilt auch für den Fall eines Prismenkopplers, wobei bei diesem der Abschwächungskoeffizient mit dem Abstand zum Wellenleiter (2) reguliert werden kann. Für eine beispielhafte Länge von $L_g = 200\,\mu m$ eines Gitters darf also die Abschwächungskonstante des Gitters nicht mehr als ungefähr 15mm$^{-1}$ betragen. Wie erwähnt entspricht dies einer speziellen "ineffizienten" Kopplergeometrie. Ein niedriger Abschwächungskoeffizient kann erreicht werden mit einem Sinusförmigen Gitter mit einer Gittertiefe von ungefähr 5..15nm in einer gängigen Wellenleiter-Geometrie für den Einsatz in (Bio-)Chemischen Sensoren, bestehend aus einer 120nm-150nm dicken Schicht eines hochbrechenden Metalloxides (n=2.1..2.4), basierend auf der Annahme der Messung mit dem TM-Moden.

Das Interferenzsignal I innerhalb des Wellenleiters (2) und hinter dem zweiten Einkoppelbereich (5) berechnet sich aus

$$I = A_m^2 + A_r^2 + 2 \cdot (A_m A_r) \cdot \cos(\phi_r - \phi_m) \qquad (3)$$

Wobei $A_r$ und $\phi_r$ die Amplitude beziehungsweise die Phase der Referenzwelle (15), $A_m$ und $\phi_m$ die Amplitude beziehungsweise die Phase der Mess-Welle (14) darstellt, jeweils hinter dem zweiten Einkoppelbereich (5). Die Phase $\phi_m$ der Mess-Welle (14) wird gemäss der Erfindung durch genannte Phasenverschiebung innerhalb des Messbereiches (4) verändert, so dass das Interferenzsignal I sinusförmig mit der Phasenverschiebung verändert wird.

Durch die erfindungsgemässe Anordnung wird also im Vergleich zu bisherigen Sensoren basierend auf Wellenleitern und Gitter- oder Prismenkopplern der Messbereich (4) von dem Einkoppelbereich getrennt. Die Messmethode beruht nicht auf dem Auslesen einer Wellenleiter-Koppler-Resonanz, sondern auf Interferometrie. Dies hat den Vorteil, dass der Messbereich nicht durch den einstellbaren Bereich einer abzutastenden Grösse wie Winkel oder Wellenlänge beschränkt ist, sondern durch die Kohärenzlänge der Lichtquelle (21). Zudem ist der Sensor in einer weiteren bevorzugten Ausführung robuster gegenüber Fabrikationstoleranzen, indem die Moden im Wellenleiter (2) über einen relativ grossen Winkelbereich angeregt werden können. Dies kann in einer weiteren bevorzugten Ausführung mit kurzen Gittern mit einer Länge von weniger als $400 \mu m$ und fokussierten Lichtstrahlen erreicht werden. Ein weiterer Vorteil liegt darin, dass der Sensor nicht anfällig ist auf Inhomogenitäten innerhalb dem Messbereich (4).

Im Vergleich zu bisherigen integriert-optischen interferometrischen Messmethoden, zum Beispiel Mach-Zehnder Interferometer oder solchen basierend auf Wellenleiter mit mehreren Schichten, ist die Erfindungsgemässe Anordnung um ein vielfaches Kostengünstiger realisierbar, da die Sensorplattform nur aus einem einzigen planaren Wellenleiter (2) und mehreren Koppelbereichen besteht.

In einer weiteren bevorzugten Ausführung ist der Sensor zudem für ein paralleles Auslesen mehrere Signale geeignet, was bisher bei Interferometrischen Sensoren nur bedingt möglich war. Dazu weist der Sensor zwischen dem ersten und zweiten Einkoppelbereich (3, 5) mindestens 3 oder mindestens 7 Messfelder auf, welche unabhängig voneinander mit unterschiedlichen Zusatzschichten (7) versehen werden können, und so zur gleichzeitigen Detektion von unterschiedlichen Substanzen eingesetzt werden können. Dabei können der erste und zweite Einkoppelbereich (3, 5) pro Messfeld ein separates Einkopplungsfeld aufweisen, so dass jeweils eine in der Ebene des Wellenleiters (2) und in Richtung senkrecht zu der Modenausbreitung abgegrenzte Welle das zugeordnete Messfeld durchläuft, was eine optimale Trennung der Signale bewirkt. Pro Einkoppelbereich (3, 5) kann der Sensor aber auch in einer kostengünstigen Ausführung ein einziges Einkopplungsfeld aufweisen, so dass dadurch im Prinzip eine einzige Welle angeregt wird, welche eine Phasenverschiebung erfährt, abhängig vom jeweiligen Messfeld, also abhängig von der Position in der Ebene des Wellenleiters (2) und senkrecht zu der Modenausbreitung. Dabei kann ein einziger Detektor mehrere Interferenzsignale messen, in einer beispielhaften Ausführung zum Beispiel ein Liniendetektor oder eine Kamera, wobei mehrere Pixel zusammengenommen werden um einen Durchschnittswert zu erhalten. In einer anderen beispielhaften Ausführung weist der Sensor pro Messkanal, welcher ein einziges Interferenzsignal eines Messfeldes aufweist, ein einziger Detektor auf.

In einer weiteren bevorzugten Ausführungsform lenkt ein Auskoppelbereich (6) das Interferenzsignal vom Wellenleiter (2) weg in Richtung eines Detektors oder mehrerer Detektoren, so dass auch mehrere erfindungsgemässe Sensoren hintereinander den gleichen Wellenleiter (2) benutzen können. Somit ist der Sensor auch für ein massiv paralleles Auslesen geeignet, und kann beispielsweise in Mikrotiterplatten integriert werden. Der Auskoppelbereich (6) kann wiederum mehrere jeweils einem Messfeld zugeordnete Auskoppelfelder aufweisen, oder ein einziges Auskoppelfeld, welche alle Signale auskoppelt.

In einer weiteren bevorzugten Ausführung sind jeweils einem oder mehreren Messfelder ein Referenz-Messfeld zugeordnet. Dies ermöglicht, dass selbst kleine Signale gegenüber Hintergrundschwankungen abgegrenzt werden können, wie diese zum Beispiel durch Temperatur- oder Brechungsindex-Schwankungen im Analyten (8) verursacht werden. Um das nützliche Signal von den Hintergrundschwankungen zu entkoppeln, werden daher alle Phasen der Interferenzsignale bestimmt, welche den Messfeldern (einem Messkanal) und den Referenz-Messfeldern (einem Referenzkanal) zugeordnet sind. Anschliessend werden die Phasen der Messkanäle von den Phasen der nächstgelegenen Referenzkanäle subtrahiert, und die resultierende Differenz im Allgemeinen als Messwert oder Messpunkt ausgegeben.

Die Phasenverschiebung $\Delta\phi$, welche die Mess-Welle (14) beim Durchlaufen des Messbereiches (4) erfährt, berechnet sich aus

$$\Delta\phi = 2\pi/\lambda \cdot \Delta N \cdot L_m \quad , \tag{4}$$

wobei $\lambda$ die Wellenlänge im Vakuum, $\Delta N$ die induzierte Änderung des effektiven Brechungsindex, und $L_m$ die Länge des Messbereiches (4) ist. Ein weiterer Vorteil gegenüber bisherigen Sensoren basierend auf Gitterkopplern ist also, dass die Empfindlichkeit des Sensors mit der Länge des Messbereiches (4) eingestellt werden kann. Um eine grosse Empfindlichkeit zu erhalten, ist die Länge des Messbereiches (4) in einer weiteren bevorzugten Ausführung mindestens das Tausendfache der Wellenlänge Mess-Welle (14)im Vakuum.

Die Änderung des effektiven Brechungsindex $\Delta N$ wiederum lässt sich aus der Empfindlichkeit S des effektiven Brechungsindex gegenüber Veränderung der zu messenden Grösse abschätzen, zum Beispiel dem Zuwachs an "Massen-Flächendeckung" (surface mass coverage) $\Delta\Gamma$ einer (Bio-)Chemischen Substanz:

$$\Delta N = \Delta\Gamma \cdot S \tag{5}$$

Die Grössenordnung der Empfindlichkeit S beträgt ungefähr $10^{-6}$ $(pg/mm^2)^{-1}$ für gängige Wellenleiter-Geometrien für den Einsatz in (Bio-)Chemischen Sensoren, bestehend aus einer 120nm-150nm dicken Schicht eines hochbrechenden Metalloxides (n=2.1..2.4), basierend auf der Annahme der Messung einer ungesättigten Schicht von Antikörpern mit dem TM-Moden.

In einer Beispielhaften Ausführung, in welcher die Zusatzschicht (7) auf der gesamten Länge einem 2mm langen Messbereich (4) aufgebracht ist, und der Sensor mit einer Wellenlänge von 650nm ausgelesen wird, induziert also mit den oben gemachten Angaben ein Zuwachs der Antikörper-Schicht von $1pg/mm^2$ eine Phasenverzögerung von etwas mehr als 1°.

Um solch kleine Veränderungen der Phasenverzögerungen des Interferenzsignales zu messen, ist in einer weiteren bevorzugten Ausführung der Sensor mit einem Phasenmodulator (24) ausgestattet, mit dessen Hilfe die Phase entweder des Mess-Strahls (12) oder des Referenz-Strahls (13) vor dem Auftreffen auf den zugeordneten Einkoppelbereich (3, 5) abgetastet werden kann. Damit wird zwangsweise auch die zugeordnete Welle im Wellenleiter (2) Phasenmoduliert. Somit kann die gesamte Phase des Kosinus-Terms des Interferenz-Signals aus Gleichung (3) über einen bestimmten Bereich abgetastet werden, was in bekannter Weise die genaue Bestimmung der durch den Messbereich (4) verursachten Phasenverzögerung erlaubt.

Der Vorteil der zeitlichen Modulation des Interferenzsignals gegenüber der Auswertung von Interferometriemustern, wie beispielsweise ein Kamerabild von Interferenzringen, besteht darin, dass die Berechnung der Phase um ein vielfaches weniger Rechenaufwändig ist und somit Kosten spart. Zudem wird das Auslesen erleichtert, da eine weniger genaue Positionierung erforderlich ist um das nützliche Signal aufzunehmen.

In einer weiteren bevorzugten Ausführung ist der Phasenmodulator (24) als Flüssigkristall-Element ausgebildet. Damit wird der Vorteil eines externen Phasenmodulators (24) gegenüber bekannten im Wellenleiter integrierten Modulatoren offensichtlich, da nämlich Modulatoren auf Basis eines Flüssigkristallelements in Massenproduktion gefertigt werden und sehr kostengünstig sein können. Um die Phase der Referenz- oder der Mess-Welle (15,14) zu manipulieren, wird diejenige nützliche Polarisation pu des Referenz- oder Mess-Strahls (13, 12) phasenverzögert, welche durch den zugeordneten Einkoppler in den Wellenleiter (2) eingekoppelt wird. Dazu ist im Allgemeinen das Flüssigkristallelement derartig ausgebildet, dass die ausserordentliche Achse des Flüssigkristalls, welche über eine Spannung reguliert werden kann, in der gleichen Ebene liegt wie die nützliche Polarisation pu.

In einer weiteren bevorzugten Ausführungsform hat der Flüssigkristall im Flüssigkristallelement keine Verdrehung (Twist) oder höchstens einen Twist von 20°, und ist mindestens ein Substrat (31) oder (32) des Flüssigkristallelements mit einer Reibrichtung (r1, r2) oder planaren Orientierung der Flüssigkristall-Randmoleküle ausgestattet, welche in der Ebene der nützlichen Polarisation pu liegt. Dadurch wird erreicht, dass die ausserordentliche Achse des Flüssigkristalls, welche über eine Spannung reguliert werden kann, in der gleichen Ebene liegt wie die nützliche Polarisation pu.

In einer weiteren bevorzugten Ausführung ist zumindest hinter dem zweiten Substrat (32), welches dem Einkoppelbereich (3, 5) zugewandt ist, ein Polarisator (34) angebracht, und zwar nur partiell in einem Bereich, welcher von einem Phasen-Referenz-Strahl (17) beleuchtet wird. Ist der Phasen-Referenz-Strahl (17) nicht schon geeignet polarisiert, kann auch ein erster Polarisator (33) vor dem ersten Substrat (31) angebracht werden. Dadurch kann mit Hilfe eines zusätzlichen Phasen-Referenzdetektors eine absolute Phasenverschiebung bestimmt werden, welche durch das Flüssigkristall-Element vorgegeben ist. Dadurch wird der absolute Wert des Abtastparameters messbar, was in bisherigen Messmethoden nicht möglich war. Somit kann eine grössere Genauigkeit erreicht werden, da Schwankungen des Abtastparameters ausgeglichen werden können, indem zum Beispiel die pro Kanal bestimmte Phase von der Phase des Phasen-Modulators abgezogen werden kann.

In einer weiteren bevorzugten Ausführung ist das Flüssigkristall-Element durch getrennte Elektroden in zwei separat ansteuerbare Bereiche aufgeteilt. Dies hat den Vorteil, dass ein weiterer Freiheitsgrad zur Ansteuerung der Phase bereitgestellt wird, so dass zum Beispiel abwechslungsweise die Phase des Mess-Strahls (12), und anschliessend die Phase des Referenz-Strahls (13) moduliert werden kann. Ein weiterer Vorteil besteht darin, dass der Referenz-Strahl (13) und der Mess-Strahl (12) viel näher nebeneinander platziert werden können, da nicht der Randbereich des Flüssigkristallelements dazwischen liegt.

In einer weiteren bevorzugten Ausführungsform sind der erste und der zweite Einkoppelbereich (3,5) nicht mit dem Analyten (8) in Kontakt. Dies hat den Vorteil, dass die Anregung der Wellen im Wellenleiter (2) nicht durch den Brechungsindex des Analyten (8) beeinflusst wird.

In einer weiteren bevorzugten Ausführung weist der Sensor eine Abdeckung (40) auf, welche die Gitterstrukturen enthält. Genügend nahe in Kontakt mit dem Wellenleiter (2) gebracht, können die Gitterstrukturen zum Anregen von Wellen im Wellenleiter (2) benutzt werden. Dies hat den Vorteil, dass die Fabrikation des Wellenleiters (2) von der Fabrikation der Gitter getrennt werden kann, und zum Beispiel der Wellenleiter (2) auf einem hochqualitativen Glas-Substrat (1) hergestellt werden kann, und das Gitter in einem Massenfertigungsverfahren, wie zum Beispiel Spritzguss, Abformen oder Heissprägen, in einer Kunststoff-Abdeckung (40) ausgeformt werden kann.

In weiteren bevorzugten Ausführungsformen werden allfällige Parasitäre Reflektionen vermieden, die von den Trennkanten verursacht werden, welche durch den Übergang einer Abdeckung (40) zu dem Analyten (8) gebildet werden. Dies wird mit einem schrägen Einfall der Wellen auf die Trennkanten erreicht, so dass nicht mehrere Reflektionen miteinander interferieren können. Dies wird in bevorzugten Ausführungen durch Schrägstellen der Trennkanten, durch Schrägstellen der Gitterkoppler, oder durch einen schrägen Einfall der Strahlen erreicht.

## KURZE BESCHREIBUNG DER ZEICHNUNGEN

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:

Figuren 1-4    Querschnitte durch Sensoren und dazugehörige Lichtpfade
Figuren 5-7    Schichtabfolgen von Flüssigkristallzellen-Phasenmodulatoren
Figuren 8-9    Perspektivische Ansichten von Sensoren
Figur 10-12    Querschnitt und Draufsicht auf einen Sensor
Figur 13       Signalverlauf einer Phasenmodulatoren-Ansteuerung, und dazugehöriger Phasen- und Interferogramm-Verlauf

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## WEGE ZUR AUSFÜHRUNG DER ERFINDUNG

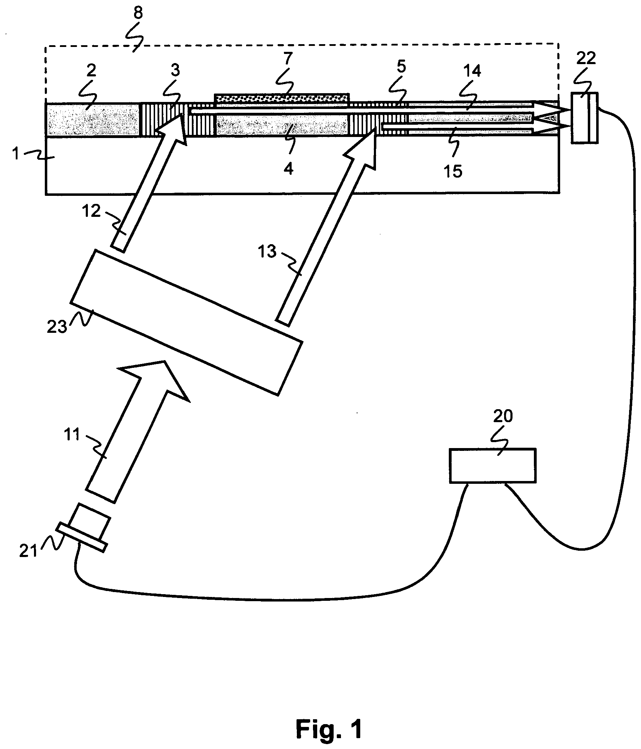

Figur 1 zeigt einen Querschnitt durch einen Sensor und dazugehörige Lichtpfade. Der Sensor weist eine Lichtquelle (21), auf, welche eine Beleuchtungsoptik (23) bestrahlt. Die Lichtquelle (21) ist vorzugsweise ein Diodenlaser mit einer Wellenlänge von 400nm bis 800nm, vorzugsweise mit einer Wellenlänge von 635 oder 650nm. Die Beleuchtungsoptik (23) teilt den Strahl in zwei Teile, in einen Mess-Strahl (12) und einen Referenz-Strahl (13), welche vorzugsweise durch ein Substrat (1) auf Einkoppelbereiche (3, 5) des Wellenleiters (2) treffen. Der Mess-Strahl (12) regt über einen ersten Einkoppelbereich (3) in einem Wellenleiter (2) eine Mess-Welle (14) an, welche in der Folge einen Messbereich (4) durchläuft. Der Messbereich (4) ist mit einer Zusatzschicht (7) versehen, welche eine (Bio-) Chemische Substanz aus dem Analyten (8) binden kann. Der Analyt (8) kann entweder eine Flüssigkeit oder ein Gas sein. Über einen zweiten Einkoppelbereich (5) wird mit dem Referenz-Strahl (13) eine Referenz-Welle (15) im Wellenleiter (2) angeregt. Die Mess-Welle (14) durchläuft den zweiten Einkoppelbereich (5) und wird durch diesen abgeschwächt. Gemäss der Erfindung wird die Mess-Welle (14) durch den zweiten Einkoppelbereich (5) höchstens auf fünf Prozent Ihrer Amplitude vor dem zweiten Einkoppelbereich (5) reduziert, und vorzugsweise höchstens auf einen Zehntel oder auf einen Fünftel oder auf einen Drittel. Hinter dem zweiten Einkoppelbereich (5) interferieren die beiden Wellen (14) und (15), so dass auf einem geeigneten Detektor (22), vorzugsweise einer Photodiode, einer CMOS-Kamera oder einem Liniendetektor, das Interferenzsignal erfasst werden kann. Die Lichtquelle (21) und der Detektor (22) werden vorzugsweise von derselben Steuerungseinheit (20) gesteuert beziehungsweise ausgelesen. In einer bevorzugten Ausführung besteht der Wellenleiter (2) aus einer 120nm-150nm dicken Schicht eines hochbrechenden Metalloxides (n=2.1..2.4), und wird in der TM-Polarisation angeregt, und weisen die Einkoppelbereiche (3, 5) 200$\mu$m lange Gitter auf, welche in bekannter Weise mit einer Tiefe von ungefähr 5..15nm in den Wellenleiter (2) oder in das Substrat (1) unter dem Wellenleiter (2), geätzt sind.

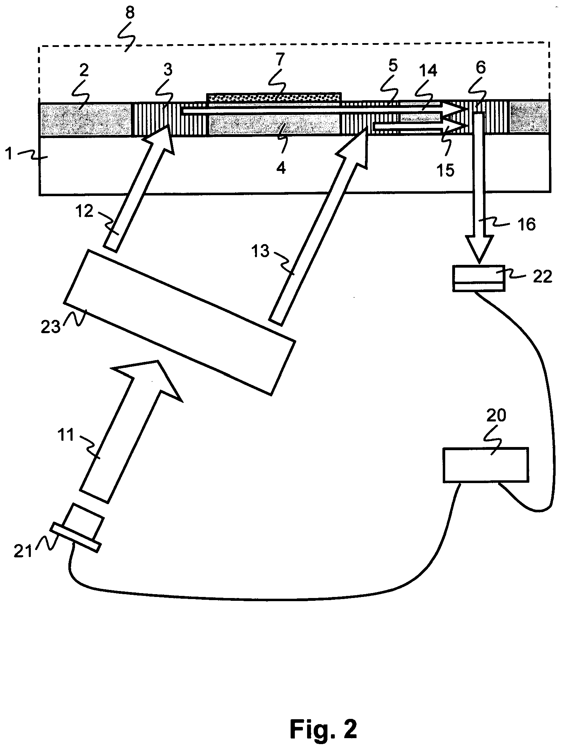

Figur 2 zeigt einen weiteren Querschnitt durch einen Sensor und dazugehörige Lichtpfade. Hinter dem zweiten Einkoppelbereich (5) ist ein Auskoppelbereich (6) angebracht, durch welchen das Interferenzsignal ausgekoppelt wird und als Signal-Strahl (16) auf den Detektor (22) trifft. Der Auskoppelbereich (6) weist in einer bevorzugten Ausführung Gitterkoppler auf, welche eine unterschiedliche Gitterperiode haben als die Einkoppelgitter.

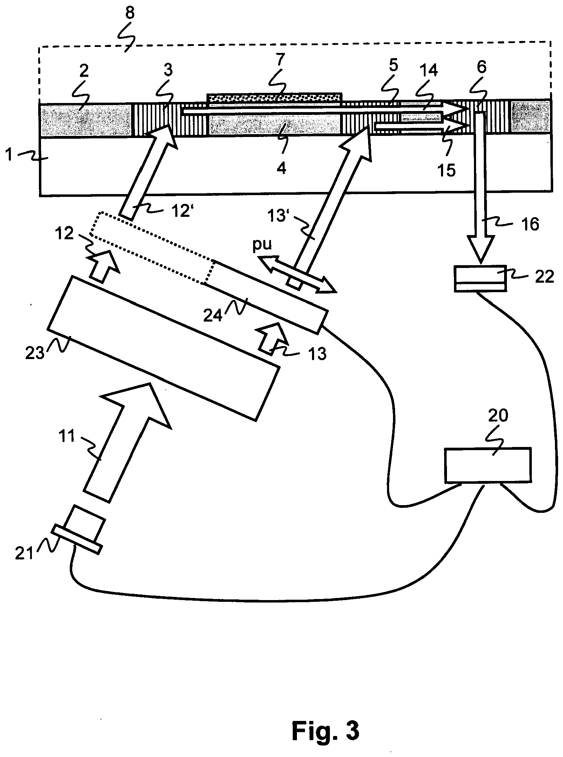

Figur 3 zeigt einen weiteren Querschnitt durch einen Sensor und dazugehörige Lichtpfade. Im Strahlengang des Referenz-Strahls (13) befindet sich ein Phasen-Modulator, so dass die Phase des Referenz-Strahls (13) (13') nach Austritt aus dem Phasen-Modulator abhängig von der Vorgabe einer Steuerungseinheit (20) verändert werden kann. Dabei wird mindestens die nützliche Polarisationsrichtung pu in der Phase moduliert. Die Richtung der nützlichen Polarisation pu ist abhängig von der Polarisation der im Wellenleiter (2) anzuregenden Wellen. Die dargestellte bevorzugte Polarisationsrichtung senkrecht zur Ausbreitung des Lichtstrahls und in der Blattebene ist dazu geeignet, TM-Wellen im Wellenleiter (2) anzuregen. Im Fall der Anregung von TE-Wellen (nicht dargestellt) liegt die nützliche Polarisationsrichtung pu senkrecht zur Ausbreitung des Lichtstrahls und senkrecht zur Blattebene. Vorzugsweise kann auch der Mess-Strahl (12) in der Phase moduliert werden, so dass die Phase des Mess-Strahls (12') nach Austritt aus dem Phasen-Modulator ebenfalls abhängig von der Vorgabe einer Steuerungseinheit (20) verändert werden kann. Dadurch ergibt sich ein von der Vorgabe der Steuerungseinheit (20) abhängiges Interferenzsignal, welches vom Detektor (22) aufgenommen wird, und von der Steuerungseinheit (20) ausgewertet wird.

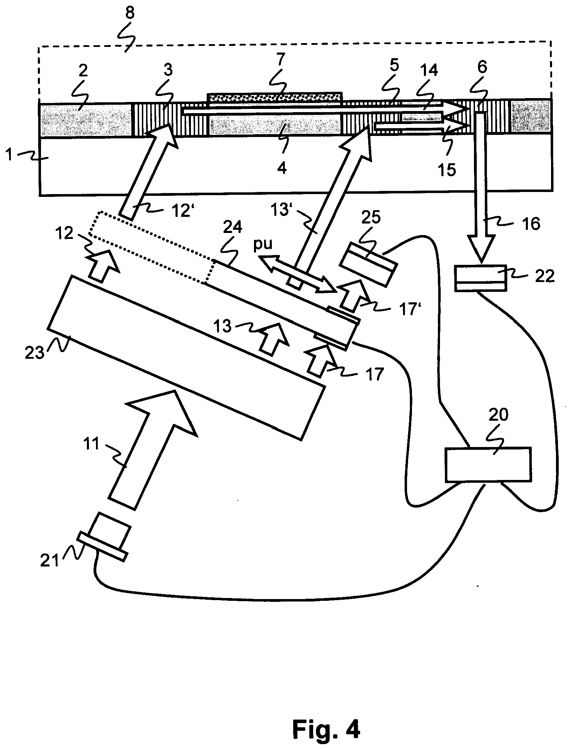

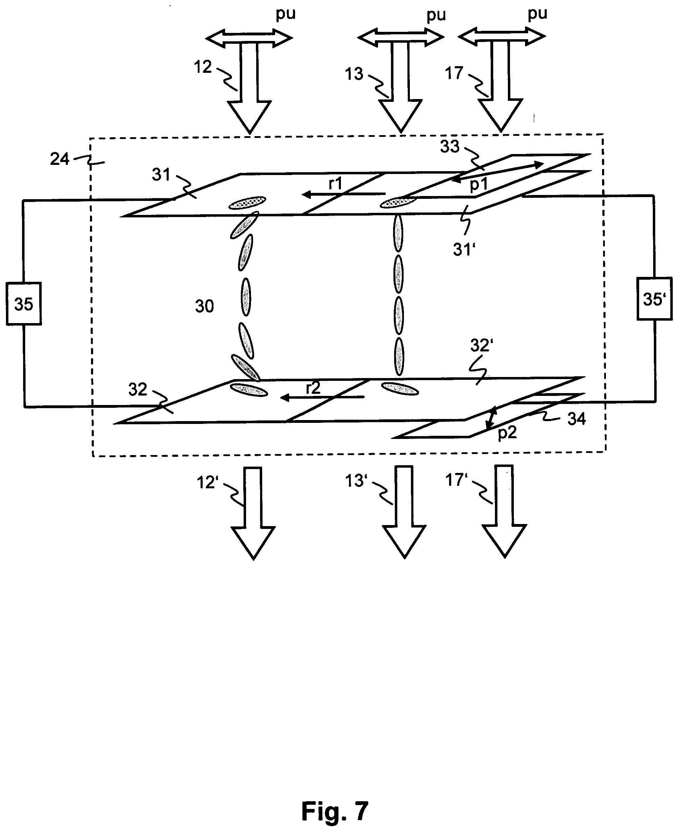

Figur 4 zeigt einen weiteren Querschnitt durch einen Sensor und dazugehörige Lichtpfade. Dabei sind zusätzlich zwei Polarisatoren (33, 34) angebracht, welche von einem Phasen-Referenz-Strahl (17) durchlaufen wird. Der Phasen-Referenz-Strahl (17) kann durch geeignete Orientierung der Polarisatoren (33,34), welche in der Figur 7 dargestellt ist, in der Intensität moduliert werden. Diese Intensitätsmodulation wird anschliessend von einem Phasen-Referenz-Detektor (25) aufgenommen, und von der Steuerungseinheit (20) ausgewertet.

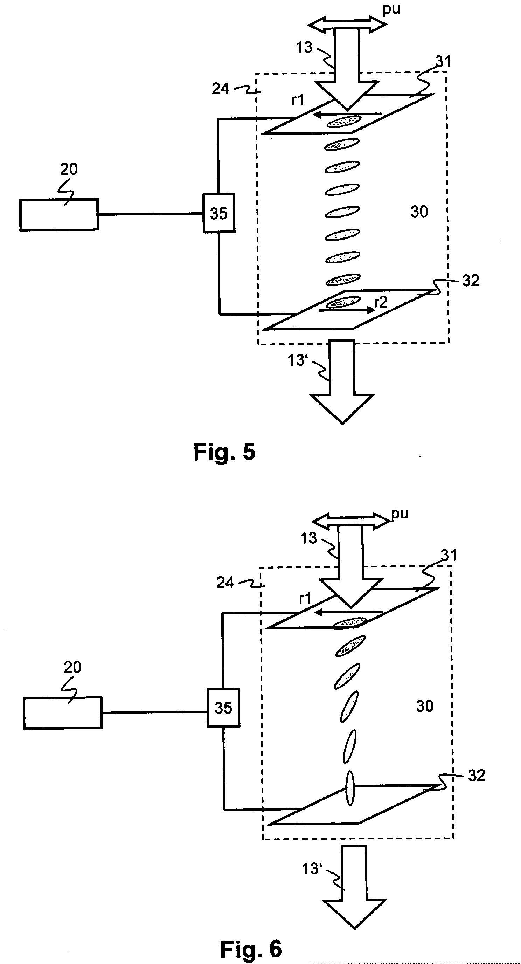

Figur 5 zeigt eine Schichtabfolge eines Flüssigkristallzellen-Phasenmodulatoren (24). Die Flüssigkristallzelle besteht aus einem ersten und zweiten Substrat mit Elektrode (31, 32), und einer dazwischen liegenden nematischen Flüssigkristallschicht (30). Die Moleküle an den Randschichten zu den Substraten (31, 32) sind in bekannter Weise, vorzugsweise durch eine geriebene Polyimidschicht, antiparallel in den Richtungen r1 und r2 orientiert, so dass die ausserordentliche Achse der Flüssigkristallmoleküle in der Ebene der Richtung der nützlichen Polarisation pu liegt. Zudem ist der Flüssigkristall zwischen den Substraten (31,32) nicht oder nur wenig verdreht. Die Ausrichtung der Flüssigkristallmoleküle kann durch Anlegen einer Spannung aus der Spannungsquelle (35) und nach Vorgabe durch die Steuereinheit in bekannter Weise verändert werden, so dass die Phase des Lichtstrahls in der nützlichen Polarisationsrichtung pu dementsprechend moduliert wird. In einer bevorzugten Ausführung hat die Zelle eine Schichtdicke von $4\mu m$ und ist mit einem Flüssigkristall gefüllt mit einer Doppelbrechung von $\Delta n \approx 0.23$ (wie zum Beispiel Flüssigkristalle mit der Produktbezeichnung Merck E7),

Figur 6 zeigt eine weitere Schichtabfolge eines Flüssigkristallzellen-Phasenmodulatoren (24). Hier weist nur das erste Substrat (31) eine planare Orientierungsschicht in der Richtung r1 der nützlichen Polarisation pu auf, während die zweite (32) eine homeotrope Orientierungsschicht aufweist. Die resultierende so genannte Hybrid-Zelle (HAN für Hybrid Aligned Nematic) hat den Vorteil, dass die als Schaltzeiten bezeichneten Zeiten, welche für ein Umorientieren der Moleküle benötigt werden, kürzer sind. In einer weiteren, nicht dargestellten, bevorzugten Ausführung weist die erste Substratschicht (31) eine homeotrope Orientierungsschicht auf, und die zweite Substratschicht (32) weist eine planare Orientierungsschicht in der Richtung der nützlichen Polarisation pu auf. In einer bevorzugten Ausführung hat die Zelle eine Schichtdicke von $6\mu m$ und ist mit einem Flüssigkristall gefüllt mit einer Doppelbrechung von $\Delta n \approx 0.23$ (wie zum Beispiel Flüssigkristalle mit der Produktbezeichnung Merck E7).

Figur 7 zeigt eine weitere Schichtabfolge eines Flüssigkristallzellen-Phasenmodulatoren (24). In dieser bevorzugten Ausführung sind beide Elektroden auf den Substraten je in zwei Teilelektroden (31, 31') und (32, 32') unterteilt, so dass zwei verschiedene Bereiche innerhalb der Flüssigkristallzelle entstehen, welche durch zwei Spannungsquellen (35', 35") abhängig von der Vorgabe einer Steuerungseinheit (nicht dargestellt) angesteuert werden können. Der Bereich, welcher vom Referenz-Strahl (13) beleuchtet wird, ist im aktivierten Zustand (das heisst, eine Spannung ist angelegt) dargestellt, während der Bereich, welcher vom Mess-Strahl (12) beleuchtet wird, im inaktivierten Zustand dargestellt ist (das heisst, keine Spannung ist angelegt). In der dargestellten bevorzugten Ausführung ist das Flüssigkristall-Element eine sogenannte Pi-Zelle, wobei beide Substrate (31,31'),(32,32') eine planare und zueinander parallel in Richtung r1, r2 geriebene Orientierungsschicht aufweisen. Diese Zelle hat den Vorteil, dass Sie eine noch schnellere Schaltzeit als die HAN-Zelle aufweist. In einer bevorzugten Ausführung hat die Zelle eine Schichtdicke von $6\mu m$ und ist mit einem Flüssigkristall gefüllt mit einer Doppelbrechung von $\Delta n \approx 0.23$ (wie zum Beispiel Flüssigkristalle mit der Produktbezeichnung Merck E7).

In einer weiteren bevorzugten Ausführungsform (nicht dargestellt) wird nur einer der beiden durch die getrennten Elektroden definierten Teilbereiche angesteuert, während beim zweiten Teilbereich die Elektroden kurzgeschlossen sind. In einer weiteren Ausführungsform (nicht dargestellt) ist nur eine der beiden Elektroden (31, 32) unterteilt, während die andere sich über beide Teilbereiche ausdehnt.

In einer weiteren bevorzugten Ausführung sind an beiden Substraten (31, 32) zusätzlich Polarisatoren (33, 34) angebracht, welche in bekannter Weise die PhasenModulation eines Phasen-Referenz-Strahls (17) in einen intensitätsmodulierten Strahl (17') umwandeln. Dazu sind die Polarisatoren (33, 34) vorzugsweise in einem Winkel von zumindest annähernd 45° gegenüber den Reibrichtungen r1, r2 angebracht.

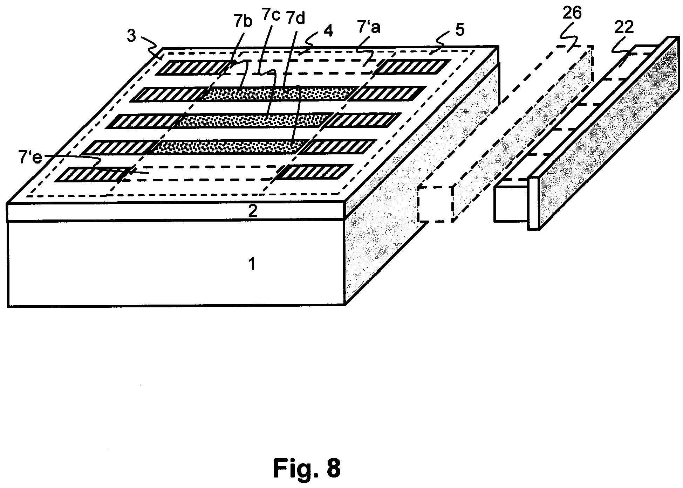

Figur 8 zeigt die Perspektivische Ansicht eines Sensors mit fünf Messkanälen. Der Sensor weist innerhalb des Messbereiches (4) drei verschiedene Zusatzschichten (7b, 7c, 7d) auf, welche unterschiedliche Substanzen aus den Analyten (8) (nicht dargestellt, im Kontakt mit den Zusatzschichten) binden können. Zusätzlich weist der Sensor zwei Referenz-Messfelder (7'a, 7'e) auf ohne Zusatzschichten, welche ein Hintergrundsignal liefern. Der Sensor verfügt vorzugsweise über eine optionale Abbildungsoptik (26), mit der die Interferenz-Signale (nicht dargestellt) an der Wellenleiter-Kante auf den Detektor (22) gebündelt werden. Die Abbildungsoptik (26) ist vorzugsweise eine positive Zylinderlinse, und der Detektor (22) ist vorzugsweise eine Zeilenkamera. In einer weiteren bevorzugten Ausführung ist jedem Messkanal ein diskreter Detektor zugeordnet, vorzugsweise eine Photodiode.

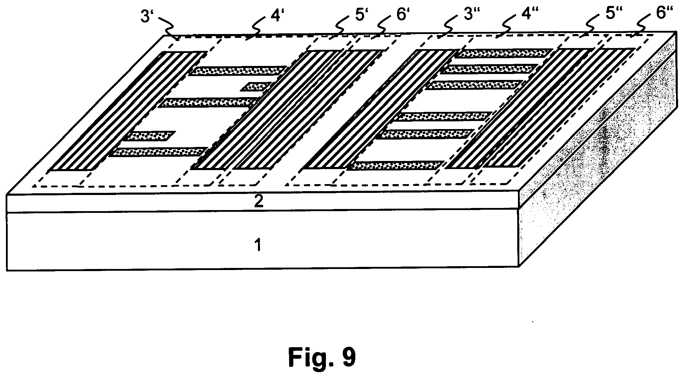

Figur 9 zeigt die Perspektivische Ansicht eines Sensors mit 16 Messkanälen. Wie in der vorgängigen Ausführung weist der Sensor jeweils zwei erste Einkoppelbereiche (3',3"), zwei Messbereiche (4',4"), zwei zweite Einkoppelbereiche (5',5") und zwei Auskoppelbereiche (6',6") auf. Die Einkoppelbereiche (3',3", 5',5") und Auskoppelbereiche (6',6") weisen jeweils ein einziges durchgehendes Koppelfeld auf.

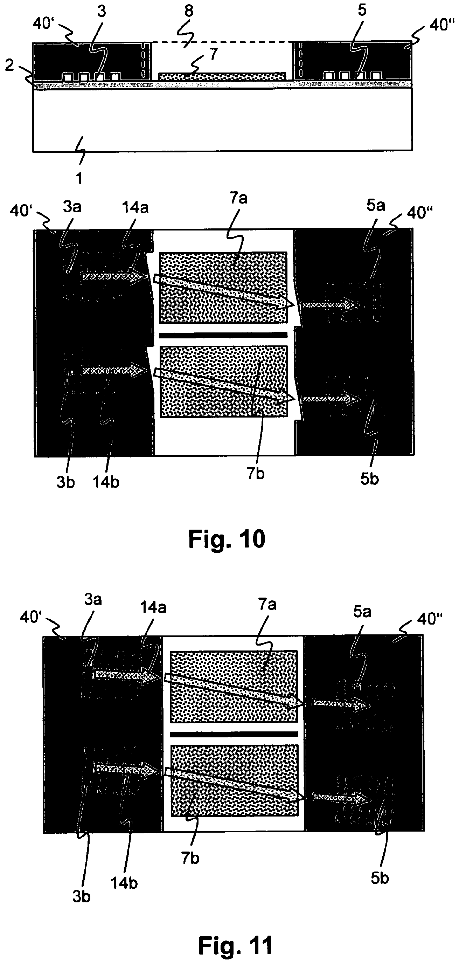

Figur 10 zeigt den Querschnitt und die Draufsicht auf einen Sensor, wobei die Koppelregionen in einer mit dem Wellenleiter (2) in Kontakt stehenden Abdeckung (40', 40") als Gitter ausgeprägt sind. Dadurch sind die Koppelgitter nicht mit dem Analyten (8) in Kontakt, und können kostengünstig hergestellt werden. Um den Einfluss von parasitären Reflexionen (nicht dargestellt) zu vermeiden, welche an den Trennkanten zwischen der Abdeckung (40', 40") und dem Analyten (8) durch den Brechungsindexunterschied entstehen, ist die Trennwand gemäss der Erfindung um zwischen 5° und 45° zu den Gitterlinien schräggestellt. In einer bevorzugten Ausführung besteht die Abdeckung (40', 40") aus einem replizierten PMMA-Teil, und steht das darin ausgeformte Gitter näher als 50 nm zum Wellenleiter (2).

Figur 11 zeigt die Draufsicht auf einen Sensor, wobei die Koppelregionen in einer mit dem Wellenleiter (2) in Kontakt stehenden Abdeckung (40', 40") als Gitter ausgeprägt sind. Dabei sind die Gitter schräggestellt gemäss der Erfindung um zwischen 5° und 45° zu der Trennkante, um den Einfluss von parasitären Reflexionen (nicht dargestellt) zu vermeiden.

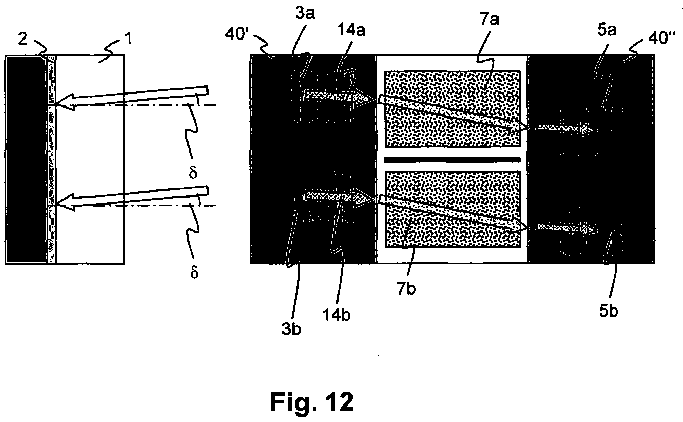

Figur 12 zeigt die Draufsicht auf einen Sensor, wobei die ersten und zweiten Einkoppelgitter unter einem schrägen Winkel $\delta$ von grösser als 5° beleuchtet werden, so dass sich die Mess-Wellen (14) und Referenz-Wellen (14) in einer Richtung ausbreiten, welche nicht senkrecht zu den Gitterlinien und den Trennkanten genannter Kunststoff-Abdeckung (40', 40") stehen, um den Einfluss von parasitären Reflexionen (nicht dargestellt) zu vermeiden.

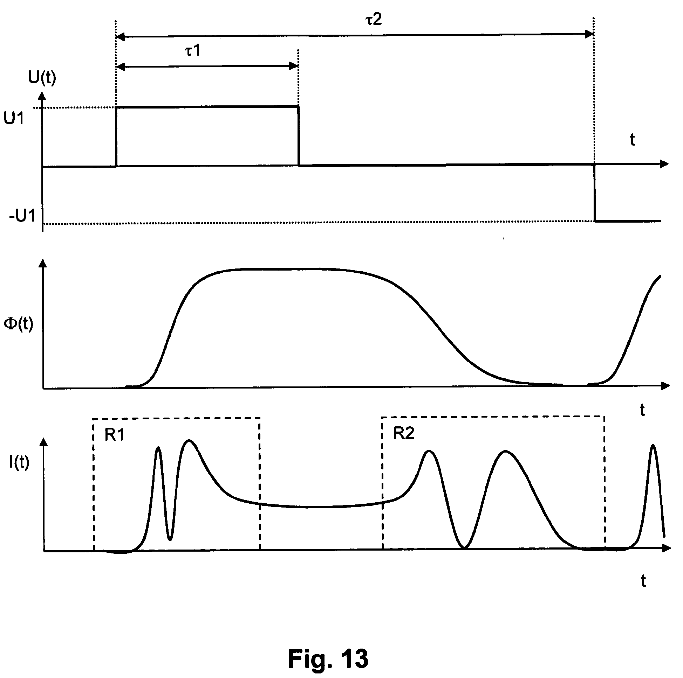

Figur 13 zeigt den Signalverlauf einer Phasenmodulatoren-Ansteuerung, und den dazugehöriger Phasen- und Interferogramm-Verlauf. Der obere Graph zeigt ein periodisches Rechteck-Signal mit Amplitude U1, Periode $\tau$2 und Dauer $\tau$1, welches zur Ansteuerung des Modulators verwendet wird, speziell zur Ansteuerung einer Flüssigkristallzelle. Der mittlere Graph zeigt den Verlauf der Phase in Abhängigkeit der Spannungsregelung. Im Fall eines Flüssigkristall-Modulators hat die Trägheit der Moleküle zur Folge, dass der Modulator gegenüber der Spannungsregelung zeitlich verzögert, typischerweise nach einigen hundert Mikrosekunden oder einigen Millisekunden, die maximale Phasenmodulation erreicht. Bei Ausschalten der Spannung ist dieses Phänomen noch ausgeprägter, das heisst die Moleküle kehren erst nach einer längeren Zeit von typischerweise einigen Millisekunden in Ihre Ursprungsposition zurück. Der untere Graph zeigt den Verlauf einer Intensitätsmodulation, zum Beispiel dem Interferenzsignal zwischen der Mess-Welle (14) und der Referenz-Welle (15), oder das Intensitäts-Modulierte Phasen-ReferenzSignal. Es können zwei Messbereiche R1 und R2 ausgemacht werden, in denen das entsprechende Interferenz-Signal aufgenommen werden kann. In einer bevorzugten Ausführung wird ein Flüssigkristall-Modulator mit einer Rechteckspannung mit einer Amplitude von U1=5V betrieben, mit einer Frequenz 1/$\tau$2 von 50Hz und einer Abtastrate $\tau$1/$\tau$2 von 0.2.

**BEZUGSZEICHENLISTE**

| | |
|---|---|
| 1 | Substrat |
| 2 | Wellenleiter |
| 3 | Erster Einkoppelbereich |
| 4 | Messbereich |
| 5 | Zweiter Einkoppelbereich |
| 6 | Auskoppelbereich |
| 7 | Zusatzschicht |
| 8 | Analyt |
| 11 | Lichtstrahl |
| 12 | Mess-Strahl |
| 13 | Referenz-Strahl |
| 14 | Mess-Welle |

15    Referenz-Welle
16    Signal-Strahl
17    Phasen-Referenz-Strahl
20    Steuerungseinheit
21    Lichtquelle
22    Detektor
23    Beleuchtungsoptik
24    Phasenmodulator
25    Phasen-Referenz-Detektor
26    Abbildungsoptik
30    Flüssigkristallschicht
31    Erstes Substrat mit Elektrode
32    Zweites Substrat mit Elektrode
33    Erster Polarisator
34    Zweiter Polarisator
35    Spannungsquelle
40    Abdeckung

**Patentansprüche**

1.   Optische Vorrichtung, aufweisend

- einen Integriert-optischen Sensor mit einen optischen Wellenleiter (2) mit mindestens einem ersten Einkoppelbereich (3), worin eine Mess-Welle (14) von einem Mess-Strahl (12) angeregt wird, und einem zweiten Einkoppelbereich (5), worin eine Referenz-Welle (15) von einem Referenz-Strahl (13) angeregt wird,
- mindestens ein zwischen dem ersten (3) und zweiten (5) Einkoppelbereich liegender und von der Mess-Welle (14) durchlaufener Messbereich (4), worin eine Veränderung der Propagationskonstante des Wellenleiters (2) abhängig von der optischen Umgebung stattfindet und so eine Phasenverschiebung der Mess-Welle (14) erzeugt wird, und
- mindestens einen Detektor (22) zum Messen eines Interferenzsignals zwischen der Mess-Welle (14) und der Referenz-Welle (15),

**dadurch gekennzeichnet, dass**
mindestens ein Teil der Mess-Welle (14) nach dem Messbereich (4) den zweiten Einkoppelbereich (5) durchläuft, und das Verhältnis der Amplituden der Mess-Welle (14) vor und nach dem zweiten Einkoppelbereich (5) höchstens 20:1 beträgt.

2.   Vorrichtung gemäss Anspruch 1, wobei das Verhältnis der Amplituden der Mess-Welle (14) vor und nach dem zweiten Einkoppelbereich (5) höchstens 10:1 oder höchstens 5:1 oder höchstens 3:1 beträgt.

3.   Vorrichtung gemäss Anspruch 1 oder 2, wobei der Messbereich (4) mindestens eine Zusatzschicht (7) aufweist, welche mindestens eine zu messende Substanz aus mit der mindestens einen Zusatzschicht (7) in Kontakt befindlichen Analyten (8) zumindest teilweise bindet.

4.   Vorrichtung gemäss Anspruch 3, aufweisend zwischen dem ersten und zweiten Einkoppelbereich (3, 5) mindestens ein Referenz-Messfeld ohne Zusatzschicht (7) zur Bestimmung eines Hintergrundsignales.

5.   Vorrichtung gemäss einem der Ansprüche 3 oder 4, aufweisend zwischen dem ersten und zweiten Einkoppelbereich (3, 5) mindestens drei oder mindestens sieben Messfelder mit unterschiedlichen Zusatzschichten (7) zur parallelen Messung von mehreren Substanzen.

6.   Vorrichtung gemäss einem der Ansprüche 1 bis 5, wobei alle Einkoppelbereiche (3, 5) und Auskoppelbereiche (6) als Gitterkoppler ausgebildet sind.

7.   Vorrichtung gemäss Anspruch 6, zusätzlich aufweisend eine kohärente Lichtquelle (21) und ein Beleuchtungs-Optik (23), **dadurch gekennzeichnet, dass** die Gitterkoppler eine Länge von höchstens 400 $\mu$m haben, und Licht von der Lichtquelle (21) durch die Beleuchtungs-Optik (23) auf die Einkoppelbereiche (3, 5) zumindest teilweise fokussiert wird.

8. Vorrichtung gemäss einem der Ansprüche 1 bis 7, aufweisend mindestens einen Phasenmodulator (24) zur Veränderung der Phase mindestens einer Polarisationsrichtung des Mess-Strahls (12) und/oder des Referenz-Strahls (13).

9. Vorrichtung gemäss Anspruch 8, wobei der Phasenmodulator (24) als Flüssigkristallelement ausgebildet ist, welches über eine angelegte Spannung regelbar ist, und aufweisend ein erstes Substrat mit Elektrode (31), ein zweites Substrat mit Elektrode (32), und eine dazwischenliegende Flüssigkristallschicht (30).

10. Vorrichtung gemäss Anspruch 9, wobei das Flüssigkristallelement einen nematischen Flüssigkristall aufweist, welcher keinen Twist oder einen Twist von weniger als 20° aufweist, und wobei mindestens ein Substrat (31) oder (32) des Flüssigkristallelements eine planare Richtung (r1, r2) der Orientierung der Randmoleküle aufweist und so die ausserordentliche Achse des Flüssigkristallelements definiert, welche zumindest annähernd parallel zu derjenigen Polarisationsrichtung (pu) des zugeordneten Lichtstrahls ist, welche der Polarisation der im Wellenleiter (2) angeregten Welle entspricht.

11. Vorrichtung gemäss Anspruch 10, wobei in einem Bereich, der von einem von der Beleuchtungsoptik (23) erzeugten Phasen-Referenz-Strahl (17) beleuchtet ist, zusätzlich mindestens am zweiten Substrat (32) ein Polarisator (34) angebracht ist, so dass der Phasen-Referenz-Strahl (17) in der Intensität moduliert wird, und wobei ein Phasen-Referenz-Detektor (25) die Intensität des modulierten Phasen-Referenz-Strahls (17') misst.

12. Vorrichtung gemäss einem der Ansprüche 9 bis 11, wobei mindestens eine Elektrode (31,32) des Flüssigkristallelements zwei getrennt ansteuerbare Bereiche definiert, wobei der erste Bereich (31,32) vom Mess-Strahl (12) beleuchtet wird und der zweite Bereich (31',32') vom Referenz-Strahl (13) beleuchtet wird.

13. Vorrichtung gemäss einem der Ansprüche 6 bis 12, wobei die Gitterstrukturen aufweisenden Koppelbereiche (3, 5, 6) nicht in Kontakt mit Analyten (8) sind.

14. Vorrichtung gemäss Anspruch 13, wobei ein unstrukturierter Wellenleiter (2) in Kontakt mit einer Abdeckung (40) ist, welche an der mit dem Wellenleiter (2) in Kontakt stehenden Oberfläche Gitterstrukturen aufweist, und

entweder die von Mess-Wellen (14) durchlaufenen Trennkanten der genannten Abdeckung (40) in einem Winkel von zwischen 5° und 45° zu den Gitterlinien stehen, um parasitäre Interferenzen von mehrmals reflektierten Mess-Wellen (14) zu vermeiden,
oder die ersten und zweiten Einkoppelbereiche (3, 5) von dem Mess-Strahl (12) und Referenz-Strahl (13) unter einem schrägen Winkel $\delta$ von grösser als 5° beleuchtet werden, so dass sich die Mess-Wellen (14) und Referenz-Wellen (14) in einer Richtung ausbreiten, welche nicht senkrecht zu den Gitterlinien und den Trennkanten genannter Abdeckung (40) stehen, um parasitäre Interferenzen von mehrmals reflektierten Mess-Wellen (14) zu vermeiden.

15. Verfahren zum interferometrischen Auslesen eines (Bio-) Chemischen Sensors gemäss einem der Ansprüche 8 bis 12 aufweisend die folgenden Schritte:

- Beleuchten mindestens zweier Einkoppelbereiche (3, 5) eines Wellenleiters (2) mit zugeordneten Lichtstrahlen, wobei ein zwischen den zwei Einkoppelbereichen (3, 5) liegender Messbereich (4) die Propagationskonstante des Wellenleiters (2) abhängig von der Bindung einer zu messenden Substanz beeinflusst;
- Modulieren der Phase zumindest eines der genannten Lichtstrahlen durch Ansteuern eines Phasenmodulator (24) mit einem kontinuierlichen Signal mit mindestens 10Hz,
- zeitgleiches Aufzeichnen eines hinter dem zweiten Einkoppelbereich (5) entstehenden und mit mindestens 1 kHz zeitlich aufgelösten Interferenzsignals,
- anschliessendes Bestimmen der Phase des zeitlich aufgelösten Interferenzsignals,
- Berechnen eines gleitenden Durchschnitts über die resultierende Phase, und
- kontinuierliches oder mit mindestens einer 0,5 Hz Anzeigefrequenz

Ausgeben des berechneten Durchschnitts als Messwerts oder
Darstellen des berechneten Durchschnitts als Messpunkts auf einer Messkurve.

**Claims**

1. Optical apparatus, having

   - an integrated optical sensor having an optical waveguide (2) with at least one first input coupling region (3), in which a measurement wave (14) is excited by a measurement beam (12), and a second input coupling region (5), in which a reference wave (15) is excited by a reference beam (13),
   - at least one measurement region (4), which is situated between the first input coupling region (3) and second input coupling region (5) and through which the measurement wave (14) travels, in which a change in the propagation constant of the waveguide (2) in dependence on the optical environment takes place and in this way a phase shift of the measurement wave (14) is produced, and
   - at least one detector (22) for measuring an interference signal between the measurement wave (14) and the reference wave (15),

   **characterized in that**,
   after the measurement region (4), at least part of the measurement wave (14) travels through the second input coupling region (5), and the ratio of the amplitudes of the measurement wave (14) before and after the second input coupling region (5) is at most 20:1.

2. Apparatus according to Claim 1, wherein the ratio of the amplitudes of the measurement wave (14) before and after the second input coupling region (5) is at most 10:1 or at most 5:1 or at most 3:1.

3. Apparatus according to Claim 1 or 2, wherein the measurement region (4) has at least one additional layer (7), which at least partially binds at least one substance to be measured from analytes (8) which are in contact with the at least one additional layer (7).

4. Apparatus according to Claim 3, having, between the first and second input coupling regions (3, 5), at least one reference measurement field without additional layer (7) to determine a background signal.

5. Apparatus according to either of Claims 3 and 4, having, between the first and second input coupling regions (3, 5), at least three or at least seven measurement fields with different additional layers (7) for the parallel measurement of a plurality of substances.

6. Apparatus according to one of Claims 1 to 5, wherein all input coupling regions (3, 5) and output coupling regions (6) are in the form of grating couplers.

7. Apparatus according to Claim 6, additionally having a coherent light source (21) and an illumination optical unit (23), **characterized in that** the grating couplers have a length of at most 400 $\mu$m and light from the light source (21) is at least partially focused onto the input coupling regions (3, 5) by the illumination optical unit (23).

8. Apparatus according to one of Claims 1 to 7, having at least one phase modulator (24) for changing the phase of at least one polarization direction of the measurement beam (12) and/or of the reference beam (13) .

9. Apparatus according to Claim 8, wherein the phase modulator (24) is in the form of a liquid-crystal element which is able to be regulated via a voltage that is applied, and having a first substrate with electrode (31), a second substrate with electrode (32), and, arranged between them, a liquid-crystal layer (30) .

10. Apparatus according to Claim 9, wherein the liquid-crystal element has a nematic liquid crystal which has no twist or has a twist of less than 20°, and wherein at least one substrate (31) or (32) of the liquid-crystal element has a planar direction (r1, r2) of the orientation of the edge molecules and in this way defines the extraordinary axis of the liquid-crystal element, which is at least approximately parallel with respect to that polarization direction (pu) of the associated light beam which corresponds to the polarization of the wave that is excited in the waveguide (2).

11. Apparatus according to Claim 10, wherein, in a region which is illuminated by a phase reference beam (17) produced by the illumination optical unit (23), additionally a polarizer (34) is attached at least at the second substrate (32), such that the phase reference beam (17) is modulated in terms of the intensity, and wherein a phase reference detector (25) measures the intensity of the modulated phase reference beam (17').

12. Apparatus according to one of Claims 9 to 11, wherein at least one electrode (31, 32) of the liquid-crystal element defines two regions which are separately actuable, wherein the first region (31, 32) is illuminated by the measurement beam (12) and the second region (31', 32') is illuminated by the reference beam (13).

13. Apparatus according to one of Claims 6 to 12, wherein the coupling regions (3, 5, 6) having grating structures are not in contact with analytes (8).

14. Apparatus according to Claim 13, wherein an unstructured waveguide (2) is in contact with a cover (40) that has grating structures at that surface which is in contact with the waveguide (2), and

either the separating edges of said cover (40) through which measurement waves (14) travel are at an angle of between 5° and 45° with respect to the grating lines in order to avoid parasitic interferences of repeatedly reflected measurement waves (14),

or the first and second input coupling regions (3, 5) are illuminated by the measurement beam (12) and reference beam (13) at an oblique angle $\delta$ of greater than 5°, with the result that the measurement waves (14) and reference waves (14) propagate in a direction that is not perpendicular to the grating lines and the separating edges of said cover (40) in order to avoid parasitic interferences of repeatedly reflected measurement waves (14).

15. Method for interferometrically reading a (bio)chemical sensor according to one of Claims 8 to 12, having the following steps:

- illuminating at least two input coupling regions (3, 5) of a waveguide (2) with associated light beams, wherein a measurement region (4), which is situated between the two input coupling regions (3, 5), influences the propagation constant of the waveguide (2) in dependence on the binding of a substance to be measured;
- modulating the phase of at least one of said light beams by actuating a phase modulator (24) with a continuous signal of at least 10 Hz,
- simultaneously recording an interference signal that is produced behind the second input coupling region (5) and is time-resolved with at least 1 kHz,
- subsequently determining the phase of the time-resolved interference signal,
- calculating a moving average over the resulting phase, and
- continuously or with at least a display frequency of 0.5 Hz,

outputting the calculated average as a measurement value, or
presenting the calculated average as a measurement point on a measurement curve.

**Revendications**

1. Dispositif optique, comprenant

- un capteur optique intégré doté d'un guide d'ondes optique (2) comportant au moins une première zone d'injection (3), dans laquelle une onde de mesure (14) est excitée par un rayon de mesure (12), et une deuxième zone d'injection (5), dans laquelle une onde de référence (15) est excitée par un rayon de référence (13),
- au moins une zone de mesure (4) qui se trouve entre la première (3) et la deuxième (5) zone d'injection et qui est traversée par l'onde de mesure (14), dans laquelle a lieu une modification de la constante de propagation du guide d'ondes (2) en fonction de l'environnement optique et un déphasage de l'onde de mesure (14) est ainsi produit, et
- au moins un détecteur (22) destiné à mesurer un signal de brouillage entre l'onde de mesure (14) et l'onde de référence (15),

**caractérisé en ce que**
au moins une partie de l'onde de mesure (14) traverse la deuxième zone d'injection (5) après la zone de mesure (4), et le rapport des amplitudes de l'onde de mesure (14) avant et après la deuxième zone d'injection (5) est au maximum égal à 20:1.

2. Dispositif selon la revendication 1, le rapport des amplitudes de l'onde de mesure (14) avant et après la deuxième zone d'injection (5) étant au maximum égal à 10:1 ou au maximum égal à 5:1 ou au maximum égal à 3:1.

**3.** Dispositif selon la revendication 1 ou 2, la zone de mesure (4) possédant au moins une couche supplémentaire (7) qui lie au moins partiellement au moins une substance à mesurer parmi les substances à analyser (8) qui se trouvent en contact avec l'au moins une couche supplémentaire (7).

**4.** Dispositif selon la revendication 3, possédant, entre la première et la deuxième zone d'injection (3, 5), au moins un champ de mesure de référence sans couche supplémentaire (7) servant à déterminer un signal d'arrière-plan.

**5.** Dispositif selon l'une des revendications 3 ou 4, possédant, entre la première et la deuxième zone d'injection (3, 5), au moins trois ou au moins sept champs de mesure ayant des couches supplémentaires (7) différentes servant à la mesure en parallèle de plusieurs substances.

**6.** Dispositif selon l'une des revendications 1 à 5, toutes les zones d'injection (3, 5) et les zones de découplage (6) étant réalisées sous la forme de coupleurs à réseau.

**7.** Dispositif selon la revendication 6, possédant en plus une source de lumière cohérente (21) et une optique d'éclairage (23), **caractérisé en ce que** les coupleurs à réseau ont une longueur maximale de 400 μm et la lumière provenant de la source de lumière (21) est au moins partiellement concentrée sur les zones d'injection (3, 5) par l'optique d'éclairage (23).

**8.** Dispositif selon l'une des revendications 1 à 7, possédant au moins un modulateur de phase (24) destiné à modifier la phase d'au moins un sens de polarisation du rayon de mesure (12) et/ou du rayon de référence (13) .

**9.** Dispositif selon la revendication 8, le modulateur de phase (24) étant réalisé sous la forme d'un élément à cristal liquide qui peut être régulé par le biais d'une tension appliquée, et comprenant un premier substrat avec une électrode (31), un deuxième substrat avec une électrode (32) et une couche de cristaux liquides (30) située entre ceux-ci.

**10.** Dispositif selon la revendication 9, l'élément à cristal liquide possédant un cristal liquide nématique qui ne possède aucune torsion ou une torsion inférieure à 20°, et au moins un substrat (31) ou (32) de l'élément à cristal liquide possède une direction plane (r1, r2) de l'orientation des molécules de bord et définit ainsi l'axe remarquable de l'élément à cristal liquide, lequel est au moins approximativement parallèle au sens de polarisation (pu) du rayon lumineux associé, lequel correspond à la polarisation de l'onde excitée dans le guide d'ondes (2).

**11.** Dispositif selon la revendication 10, un polariseur (34) est monté en plus, au moins sur le deuxième substrat (32), dans une zone qui est éclairée par un rayon de référence de phase (17) généré par l'optique d'éclairage (23), de sorte que le rayon de référence de phase (17) soit modulé en intensité, et un détecteur de référence de phase (25) mesurant l'intensité du rayon de référence de phase modulé (17').

**12.** Dispositif selon l'une des revendications 9 à 11, au moins une électrode (31, 32) de l'élément à cristal liquide définissant deux zones pouvant être excitées séparément, la première zone (31, 32) étant éclairée par le rayon de mesure (12) et la deuxième zone (31', 32') étant éclairée par le rayon de référence (13).

**13.** Dispositif selon l'une des revendications 6 à 12, les zones de couplage (3, 5, 6) qui possèdent les structures en réseau n'étant pas en contact avec les substances à analyser (8).

**14.** Dispositif selon la revendication 13, un guide d'ondes non structuré (2) se trouvant en contact avec un capot (40) qui possède des structures en réseau au niveau de la surface qui se trouve en contact avec le guide d'ondes (2), et soit les bords de séparation dudit capot (40) qui sont traversés par les ondes de mesure (14) se trouvent à un angle compris entre 5° et 45° par rapport aux lignes du réseau afin d'éviter les brouillages parasites d'ondes de mesure (14) réfléchies plusieurs fois, soit les première et deuxième zones d'injection (3, 5) sont éclairées par le rayon de mesure (12) et le rayon de référence (13) sous un angle oblique δ supérieur à 5°, de sorte que les ondes de mesure (14) et les ondes de référence (14) se propagent dans une direction qui n'est pas perpendiculaire aux lignes du réseau et aux bords de séparation dudit capot (40) afin d'éviter les brouillages parasites d'ondes de mesure (14) réfléchies plusieurs fois.

**15.** Procédé de lecture par interférométrie d'un capteur (bio-)chimique selon l'une des revendications 8 à 12, comprenant les étapes suivantes :

- éclairage d'au moins deux zones d'injection (3, 5) d'un guide d'ondes (2) avec des rayons lumineux associés, une zone de mesure (4) qui se trouve entre les deux zones d'injection (3, 5) influençant la constante de propagation du guide d'ondes (2) en fonction de la liaison avec une substance à mesurer ;
- modulation de la phase d'au moins l'un desdits rayons lumineux par excitation d'un modulateur de phase (24) avec un signal continue à au moins 10 Hz,
- enregistrement simultané d'un signal de brouillage apparaissant derrière la deuxième zone d'injection (5) et avec une résolution dans le temps d'au moins 1 kHz,
- ensuite détermination de la phase du signal de brouillage résolu dans le temps,
- calcul d'une moyenne flottante sur la phase résultante, et
- continuellement ou avec une fréquence d'affichage d'au moins 0,5 Hz,

* délivrance de la moyenne calculée sous la forme d'une valeur mesurée ou
* représentation de la moyenne calculée sous la forme d'un point de mesure sur une courbe de mesure.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9304357 A
- EP 1031828 A
- WO 06071992 A
- US 6335793 B
- WO 9822807 A